Europäisches Patentamt

European Patent Office

Office européen des brevets

(19)

(11) Publication number: **0 093 699**
**A2**

---

(12) **EUROPEAN PATENT APPLICATION**

(21) Application number: **83830086.1**

(22) Date of filing: **28.04.83**

(51) Int. Cl.³: **G 02 C 7/02**

---

(30) Priority: **30.04.82 IT 4831582**

(43) Date of publication of application:
**09.11.83 Bulletin 83/45**

(84) Designated Contracting States:
**AT BE CH DE FR GB LI LU NL SE**

(71) Applicant: **OTTICA ROMANI S.r.L.**
**122, Via Flavia**
**I-00187 Rome(IT)**

(72) Inventor: **Romani, Franco, Dr.**
**9, Piazza Don Minzoni**
**00197 Rome(IT)**

(74) Representative: **Cioncoloni, Enrico, Dr.**
**Studio Consulenza Brevetti 76, Via F. Turati**
**I-00185 Rome(IT)**

---

(54) **A negative lens provided with an annular perimetrical surface having a modified vergency and process to carry out same.**

(57) A negative lens (110, 410) and particularly a lens to correct a very short-sightedness the rear face of which is provided with a central spherical concave surface (12) and an annular perimetrical surface (112, 412), this latter being shaped differently from the former to modify its vergency either to remedy well known drawbacks of conventional negative lens or to correct also the long-sightedness of the myopic person who is wearing that negative lens.

The refraction defects of a myopic eye is in any case corrected by the suitable central concave surface (12). A consecutive annular perimetrical surface (112) is suitably shaped convexly in order that the modified vergency of same may eliminate or so attenuate the disagreeable appearance of concentric circles that these latter can hardly be seen by an observer. The rear face of negative lens (110) is in this case shaped as a continuous concave-convex surface.

When that consecutive annular perimetrical surface (412) is shaped again concavely with a bend radius suitably greater than said central concave surface, then the person who is wearing such a negative lens (410) may also correct his long-sightedness by turning his eyes therethrough. The rear face of negative lens (410 is in this case shaped as a continuous concave-concave surface.

FIG.2

FIG.5

The invention relates to a negative lens and particularly to a lens for correcting a very short-sightedness, the rear face of which is provided with a central spherical concave surface and a consecutive annular perimetrical surface having a modified vergency. According to a first important embodiment the vergency modification is carried out by shaping convexly such an annular perimetrical surface in continuation of the main central concave surface of the negative lens so that, not only are satisfied the exigences of a myopic person but also eliminated or reduced as much as possible the disagreable concentric circles which are generally seen by an observer. According to a second embodiment the annular perimetrical surface may be shaped too concavely but with a bend radius so great that the long-sightedness exigences of the myopic person are also satisfied when he is turning his eyes therethrough.

The invention relates also to a working process to carry out this novel type of negative lens so that a suitable vergency modification is provided by shaping differently the annular perimetrical surface of the rear face of the lens.

To correct refraction defects of a myopic eye a plano-concave lens is generally used. Two disadvantageous drawbacks are to be recalled here, namely: the own weight of the lens, particularly when it is manufactured of glass, which is as much higher as higher is the myopia to be corrected because of its dependence on the greater thickness of a conventional negative lens; the disagreable vision of concentric circles that an observer may have when is looking at the front side of a very short-sighted lens, such concentric circles being as much remarkable as higher is the myopia of the user.

From the technical literature as well as from the found commercial production it is not yet resulting to the Applicant that the attention of skilled in the art has up to date devoted to remedy the drawbacks of conventional negative lens. Particular attention has been attached to progressively replace the use of glass having a constant index of refraction up to 1,525 with the use of so-called "organic glass", or generally with the use of very transparent and very light plastic materials, the limitation of these latter being however suggested because of their lower hardness and scratch strength, in spite of the actual improvements effected in this connection. On the other hand, the partial solution of the weight problem has not yet followed with that concerning the problem of how to eliminate the cited vision of concentric circles, also when the negative lens is designed with a diameter of at least 45 to 50 mm.

The Applicant has attached his best attention to solve this important problem and has carried out many experiments thereabout not only to remedy these drawbacks, but also to improve the shape of a negative lens for very short-sightedness so that it may be advantag-eousely used to correct also the long-sightedness of a myopic person.

It was found that to eliminate or, at least, reduce remarkably the disagreable vision of concentric circles on the outer face of a negative lens for very short-sighted persons an

0093699

annular perimetrical surface having a convex shape is to be provided as a continuation of the main central concave shape of such a negative lens. It was also found that a suitable convex shaping of the annular perimetrical surface has actually no influence on the main scope of the invention i.e. to correct refraction defects of a myopic eye, as a continuous concave-convex surface is really performed at the rear face of such negative lens.

As premised, it is possible to take advantage of a suitable vergency modification of that annular perimetrical surface of a negative lens to further correct the long-sightedness of a very myopic user. In this case, the annular perimetrical surface of the negative lens is to performed with a further concave shape in continuation of said main central concave surface, the bend radius of the former being obviously suitably greater than this latter. A continuous concave-concave surface is then performed at the rear face of such negative lens, and the user may correct his long-sightedness by turning his eyes through the concave permetrical surface of same.

To carry out a negative lens in which that annular perimetrical surface has a vergency different from that of the central spherical surface, a novel working process is provided in accordance with the invention and auxiliary working phases are included in the sequence of conventional processing relating to the manufacture of conventional negative lens. On the ground of many experiments the Applicant has deduced that these auxiliary working phases are preferably to be included after the main central concave surface has been shaped, either to carry out a further convex or concave annular perimetrical surface in continuation of same, the bend radius of which is suitable to eliminate the drawbacks of concentric circles or to further correct the long-sightedness defects of a very myopic person, respectively.

Referring again to the concave annular perimetrical surface it is to point out that the concave shaping may be carried out at first by step-grinding-in that surface of the roughed-out workpiece and then defining the designed shape by a suitable finishing operation. The step-grinding-in operation is carried out by changing at consecutive intervals the relative position of the workpiece in respect to the patina of generator in order to jog the bending center as desired.

As premised, a plano-concave lens is generally used to correct the refraction defects of a myopic person. In accordance with the invention either the working process and the negative lens to be produced are not limited to such a plano-concave form, as the correction of eventual other defects of the eye is also taken into account. A particular importance is attached to the correction of astigmatism, a toric surface at the front face of the negative lens being then preferred.

The case of a bi-concave lens is also to be considered, the front face of which has a single concave shape with a bend radius much more greater than the central concave shape of the rear face. The working process according to the invention does not comprise any shaping of the front face of the negative lens, but only that of the central and perimetrical surfaces relating to the rear face of same.

- 6 -

**0093699**

The main object of the invention is then to remedy the recalled drawbacks of a conventional negative lens and solve
the problem of how to eliminate or remarkably attenuate the
disagreable appearance of concentric circles seen by an observer on the outer front face of the lens. A negative lens
particularly suitable to correct very short-sightedness of
a person is provided, the front face of which is shaped to
correct any eventual other defect of the eye, while the
rear face comprises a central spherical concavely shaped
surface so defined that is sufficient to correct the refraction defects of the eye,and a consecutive annular perimetrical surface which is differently shaped, and precisi-
ly convexly shaped,in continuation of that central concave-
ly shaped surface of the rear face, in order to fully eli-
nate the disagreable concentric circles generally seen by
an observer or reduce same so that an observer can hardly
see them.

Another object of the invention is to provide a negative
lens the front face of which is shaped to correct any
other defect of the eye, while the rear face comprises a
central spherical concavely shaped surface so defined to be
sufficient for correcting the refraction defects of the
myopic eye, and a consecutive annular perimetrical surface having a further concave shape, in continuation of
that central concave surface of the rear face, the bend
radius of that annular perimetrical surface being however
greater than said central concave surface in order to correct also the presbyopia of a myopic person who is turning
his eyes therethrough.

A further object of the invention is to provide a working process to carry out a negative lens, and particularly a plano-concave lens for very short-sighted person, wherein the central spherical concave surface is so defined to be sufficient for correcting the defects of a myopic person, a consecutive annular perimetrical surface being provided with a modified vergency. The process generally comprises: a roughing-out working of the rear face of the lens workpiece near the designed final thickness of the negative lens; a first grinding-in of the roughed-out workpiece by using a generator the patina of which has a convex spherical surface suitable to shape the central spherical surface of the negative lens; one or more auxiliary grinding-in operations to suitably shape the annular perimetrical surface of the rear face, so that this latter is shaped convexly when the object of the invention is to eliminate the recalled concentric circles, or is shaped again concavely when the negative is to be worn by a myopic person to correct also his defects of presbyopia; and a final finishing working.

In order that the novel characteristics of the invention and the advantages offered by same may be better interpreted by the skilled in the art, examples of the working process and two embodiments of the invention are described hereafter and illustrated in the accompanying drawing wherein:

Fig.1 is a cross-section of a plano-concave lens as an example of usually manufactured and used negative lens, wherein a dashed convex shape is shown to evidence the provided annular perimetrical surface having a modified vergency in accordance with the most important object of the invention;

Fig.2 is a cross-section of a plano-concave lens like Fig.1 wherein the convex shape of the annular perimetrical surface as well as the continuous concave-convex shape of the rear face of negative lens are well defined;

Fig.3 is a cross-section of a diverging concave-convex lens wherein the rear face is still shaped like Fig.2 in accordance with the invention;

Fig.4 is a cross-section of bi-concave lens wherein the rear face is still shaped like Fig.2;

Fig.5 is a cross-section of a very short-sighted lens wherein the annular perimetrical surface of the rear face is shaped concavely with a bend radius suitable to correct also the long-sightedness of the myopic person.

The working process according to the invention comprises working phases substantially like those to carry out a conventional negative lens, one or more auxiliary working phases being however added to perform the particular shape of the annular perimetrical surface at the rear face of the lens.

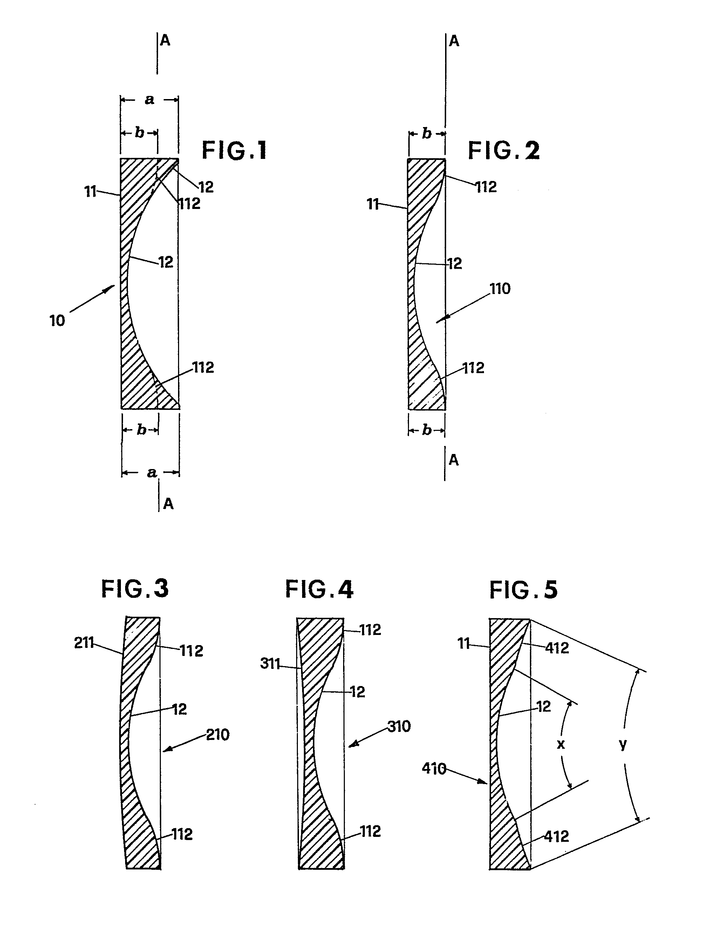

Referring for example to the plano-concave lens of Figs. 1 and 2, the first working phase concerns the roughing-out of an usual glass piece having a constant index of refraction, as premised, and is thereby worked till near the final thickness designed for this negative lens in accordance with the invention. The material is removed by means of a mechanical rubbing action and using siliceous sand, this chipping phase being continued till a thickness little greater than that to carry on the working process is reached.

The second working phase concerns the grinding-in working of the rough-shaped workpiece to perform that concave spherical shape of the rear face of the negative lens which corresponds to the degree of myopia to be corrected. To carry out this second phase of the working process the rough-shaped glass block is firmly retained by means of a suitable support and subjected to the action of a grinder the patina of which has a spherical convex shape corresponding to spherical concave shape of the negative lens to be performed. In order that the operative elements of the grinder may have the suitable hardness to grind-in the rough-shaped workpiece, a diamond rubbish covering is usually provided. The grinding member is pivoted about a revolution center which corresponds to the bend center of the spherical concave surface of the rear face of the lens. As it is well known, the grinding-in operation may be furthered by interposing a mixture of water and carborundum powder between the suitable convex patina and the roughed-out glass workpiece to be ground-in, as such an emery mixture makes easier the abrasive action of the tool, after which the spherical concave shaping of the negative lens is generally finished.

It is however to point out that in accordance with the invention, a convex shaping is further to be carried out, which concerns the claimed annular perimetrical surface of the rear face of the negative lens, as a continuation of the main central concave shaped surface just performed. That is to say, the working process according to the invention comprises at least a third working phase as an auxiliary phase to be carried out by shifting the revolution center of the generator to a new position opposite the former along the operative axis, as the grinding-in operation relates now to a convex shaping of said annular perimetrical surface of the rear face of the negative lens. This latter will thereby provided with a continuous surface having a concave-convex shape in accordance with the main object of the invention.

As usual, the following final working phase to carry out this negative lens concerns the polishing operation of same. which is preferably carried out by using very fine and neverthless very hard powders, for example iron oxide, to act when the patina is rubbing against the lens surface. In order to limit as desired the rubbing effect of the patina it is advisable to shield the lens surface as suitable as possible, usually by means of a paper sheet or a suitable pitch lager.

A first embodiment of a negative lens manufactured in accordance with above working process - i.e. with a main central concave surface and a consecutive annular perimetrical convex surface - is shown in Fig.2 and indicated with the reference numeral 110. The plane surface at the front face of this lens and the opposite central concave face at the rear face of same, which are indicated with the reference numeral 11 and 12, respectively, are substantially like a conventional plano-concave lens 10 shown in Fig.1 and also indicated with reference numeral 11 and 12, respectively. Particularly in the case of a very short-sighted lens the perimetrical edge of same has a remarkable thickness $\underline{a}$ , which is reduced to $\underline{b}$ when the convex shaping of that annular perimetrical surface is carried out in accordance with the invention and a negati-

- 11 -

0093699

ve lens with a concave-convex surface is performed, as shown in Fig.2. The plane  A-A of Figs.1 and 2 is then the plane of surface 12, 112 relating to the rear face of the lens, i.e. the face turned to the eyes of a short-sighted person, the central concave surface 12 of which is in any case suitable to diverge the incident parallel rays of an observed image, as it is necessary to correct the myopic defect of the user. In accordance with this first embodiment of the invention a perimetrical annular surface 112 is provided which is convexly shaped in order to eliminate or attenuate the disadvantageous and disagreable appearance of concentric circles so much that an observer can hardly see them, as said above. It is also to point out that this latter problem is solved without having any practical influence on the corrective effect of the central concave surface 112 of negative lens 110. That is to say, the correction power of the novel negative lens is maintened after the shaping operation is carried out in accordance with the invention.

The working process to perform the rear face of a negative lens as described hereabove may obviously be applied in the case of a diverging concave-convex lens 211 as shown in Fig.3 or in the case of a bi-concave lens as shown in Fig.4 wherein is indicated with the reference numeral 311. The rear face of both lens is provided with the central concave surface 12 to correct the myopic defect of the eye, and the annular perimetrical surface 112 to solve particularly the problem of eliminating the recalled concentric circles, as described with reference to Figs.1 and 2.

It will be understood that an annular perimetrical convex surface may also be provided when the negative lens is to be performed to correct the further astigmatism of a short-sighted person, for example by a toric lens (not shown). The suitable toric surface is preferably to be carried out on the front face of the lens. It is anyhow to point out that the shaping of the front face of a negative lens is not comprised in the invention.

A second embodiment of the invention relates to a further negative lens having the main central concave surface of its rear face suitable to correct the myopic defect of the eye and a consecutive annular perimetrical surface in accordance with the invention which is also shaped concavely with a bend radius suitable to correct the long-sightedness of the myopic person when he is turning his eyes therethrough.

An example of this second embodiment is shown in Fig.5 wherein the cross-section is still relating to a plano-concave lens 410 comprising a front plane surface 11 and a central spherical concave 12, the bend radius as well as the angle X of which are suitable to actually correct the myopic defects of the person which is wearing such a lens. Differently from the first embodiment, the annular perimetrical surface 412 is again shaped concavely with a bend radius greater than the former and suitable to correct the long-sightedness of the user, so that he may have a clear vision of an image when observed therethrough.

Coming back to the working process, one or more auxiliary working phases are provided to perform this further annular perimetrical surface 412, as a concavely shaped continuation of the central concave surface 12. A generator may be provi-

ded the grinding-in member of which is operating about a single revolution center either to shape the main concave central surface 12 and the concave annular perimetrical surface 412. In this case it is only necessary that the radius of convex surface of the patina corresponds to the radius of the concave surface to be shaped, either 12 or 412. The concave annular perimetrical surface 412 may also be performed by a step-grinding-in operation. In this case a generator is to be used the grinding-in member of which has a predetermined convex surface to revolve about consecutively shifted centers so that a firstly step-shaped concave surface 412 is carried out, after which the final uniform concave shape of same is performed by means of the further finishing and polishing phases of the working process.

It is important to point out that all the usual and auxiliary phases of the working process to shape the rear face of a negative lens in accordance with a preferred embodiment of the invention may be carried out through a single machine wherein the roughing-out, grinding-in and finishing operations may also go automatically in a designed sequential form.

# 0093699

Claims:

1. Negative lens particularly suitable to correct very short-sightedness, the front face of which (11, 211, 311) is shaped to correct any eventual other defect of the eye while the rear face comprises a central spherical concave surface (12) for myopia and a consecutive annular perimetrical surface (112, 412) having a modified vergency, either to eliminate well known drawbacks of lens for very short-sighted persons or to correct also the presbyopia of same, c h a r a c t e r i z e d in that said rear face comprises a central spherical concavely shaped surface (12) so defined that is sufficient to correct the refraction defects of the eye of a very myopic person and a consecutive annular perimetrical surface (112, 412) which is shaped differently in order to modify the vergency of same according to the purposes of that modification; such a consecutive annular perimetrical surface of the rear face having a convex shape (112) to fully eliminate the disagreable concentric circles generally seen by an observer or reduce same so that an observer can hardly see them; while it is provided with a concave shape (412) in continuation of said central concave shape (12) the bend radius of which is however suitable to correct also the presbyopia of a myope person who is turning his eyes therethrough.

2. A negative lens as claimed in Claim 1, characterized in that the front face of same comprises a convex spherical surface (211) the bend radius of which is suitably great to correct a correspondent other defect of the myopic eye.

3. A negative lens as claimed in Claim 1, c h a r a c t e r i-
z e d in that the front face of same comprises a concave spherical surface (311) the bend radius of which is suitably great to correct a correspondent other defect of the
myopic eye.

4. A negative lens as claimed in Claim 1, c h a r a c t e -
r i z e d in that the front face of same comprises a
toric shaped surface to correct defects of astigmatism
of the myopic eye.

5. A negative lens as claimed in Claim 1, c h a r a c t e -
r i z e d in that the rear face of same comprises a central spherical concave surface (12) and an annular perimetrical convex surface (112), this latter forming a continuation of said central concave surface (12).

6. A negative lens as claimed in Claim 1, c h a r a c t e -
r i z e d in that the rear face of same comprises a central spherical concave surface (12) and an annular perimetrical surface (412), this latter being also shaped concavely with a bend radius suitably greater than the bend radius of said sentral concave surface (12) and forming a
continuous surface with same.

7. A working process to carry out a negative lens as claimed
in Claims 1 and 5, c h a r a c t e r i z e d in that com-
prises the following working phases to suitably shape the
rear face of such a myope lens:
- roughing-out working of the rear face of the lens workpiece till near a designed final thickness (b) of this
latter;

- a first grinding-in working of said roughed-out workpiece by using a generator which is provided with a patina having a convex spherical surface suitable to shape the designed central concave surface (12) of the
lens, the bend radius of which corresponds to the degree
of myopia to be corrected;

- an auxiliary grinding-in working phase wherein a generator is used the patina of which has has a spherical con-
cave surface to operate about a revolution center in
order to convexly shape said annular perimetrical surface (112) of the myope lens as designed;

- a final polishing of the shaped rear face of the lens
so that an ultimate continuous concave-convex surface
is performed.

8. A working process to carry out a negative lens as claimed in Claims 1 and 6, c h a r a c t e r i z e d  in that
comprises the following working phases to shape the rear
face of a such a negative lens:

- a roughing-out working of the rear face of the lens
workpiece near the designed final thickness of the lens;

- a first grinding-in of the roughed-out workpiece by
using a generator which is provided with a patina having
a convex spherical surface suitable to shape the central
concave surface (12) of the lens, the bend radius of the
concave surface (12) corresponding to the degree of myopia to be corrected;

- an auxiliary grinding-in by means of a generator the patina of which has a convex spherical surface corresponding to the degree of presbyopia to be corrected and operating about a revolution center which is suitable to
shape the annular perimetrical surface (412) as designed;

- a final polishing phase of the shaped rear face of the lens so that an ultimate concave-concave continuous surface is performed.

9. A working process as claimed in Claim 8 c h a r a c t e - r i z e d in that two or more auxiliary grinding-in phases are provided after the first one in order that a step grinding-in of said annular perimetrical surface is firstly carried out by using a generator having a convex spherical surface and operating consecutively about different revolution centers, a step shaping of said annular perimetrical surface being thereby performed, afterwhich the desired uniform concave shape of same in continuation of said central spherical concave surface of the myope lens is carried out by said final finishing operation.

FIG.1
FIG.2
FIG.3
FIG.4
FIG.5

0093699